# EUROPÄISCHE PATENTSCHRIFT

(11) **EP 3 178 633 B1**
(45) Veröffentlichungstag und Bekanntmachung des Hinweises auf die Patenterteilung: **26.09.2018**
(21) Anmeldenummer: 16002161.4
(22) Anmeldetag: 06.10.2016
(51) Int. Cl.: B29C 63/10

(54) **WICKELDORN IN EINER WICKELVORRICHTUNG ZUR HERSTELLUNG EINES AUSKLEIDUNGSSCHLAUCHS ZUR AUSKLEIDUNG VON KANÄLEN UND ROHRLEITUNGEN**
WINDING MANDREL IN A WINDING DEVICE FOR PRODUCING A CLADDING HOSE FOR CLADDING CHANNELS AND PIPE SYSTEMS
MANDRIN DE BOBINAGE DANS UN DISPOSITIF DE BOBINAGE DESTINÉ À FABRIQUER UNE CHEMISE DESTINÉE À REVÊTIR DES CANAUX ET DES CONDUITES

(30) Priorität: 17.11.2015 DE 102015014729
(43) Veröffentlichungstag der Anmeldung: 14.06.2017
(73) Patentinhaber: Brandenburger Patentverwertung GbR, 76829 Landau (DE)
(72) Erfinder: Duttenhöfer, Peter, 76831 Ilbesheim (DE); Singler, Timo, 67158 Ellerstadt (DE)
(74) Vertreter: Kesselhut, Wolf

(56) Entgegenhaltungen:
- DE-C2- 19 823 714
- US-A- 3 570 749

## Beschreibung

Die Erfindung betrifft einen Wickeldorn in einer Wickelvorrichtung zur Herstellung eines Auskleidungsschlauchs zur Auskleidung von Kanälen gemäß dem Oberbegriff von Anspruch 1.

Auf dem Gebiet der grabenlosen Sanierung von defekten Abwasserkanälen werden zunehmend Auskleidungsschläuche eingesetzt, die als "Inliner" bezeichnet werden und aus einem Fasermaterial, insbesondere aus Glasfasergewebe bestehen, welches mit einem flüssigen Reaktionsharz getränkt ist, das nach dem Einziehen des Auskleidungsschlauchs in einen zu sanierenden Kanal und Expandieren desselben mit Hilfe von Druckluft durch Licht einer Strahlungsquelle ausgehärtet wird.

Ein solcher Auskleidungsschlauch sowie ein Verfahren und eine Vorrichtung zur Herstellung eines solchen sind beispielsweise aus der DE 198 23 714C2 bekannt.

Die Herstellung des Auskleidungsschlauchs erfolgt dadurch, dass die harzgetränkten Faserbänder in einer Wickelvorrichtung überlappend auf einen für UV-Licht durchlässigen Innenfolienschlauch aufgewickelt werden, der zuvor auf ein fliegend gelagertes Halterohr aufgezogen wird, an dessen Ende sich ein Wickeldorn befindet, über den der Innenfolienschlauch während des Wickelvorgangs bewegt wird. Der Wickeldorn besitz zwei oder mehr Führungseinrichtungen in Form von umlaufenden Riemen, die in radialer Richtung relativ zueinander verfahren werden können, um den Durchmesser des Auskleidungsschlauchs an einen gewünschten Kanaldurchmesser anpassen zu können.

Hierbei ergibt sich das Problem, dass die in der Regel nahtlos gefertigten Innenfolienschläuche auf die die Faserbänder aufgewickelt werden herstellungsbedingte Umfangstoleranzen von z.B. bis zu ± 14 mm aufweisen können. Der Wickeldorn, über den der Innenfolienschlauch bei der Herstellung des Auskleidungsschlauchs geführt wird, soll hingegen in seinem Durchmesser so eingestellt sein, dass die Schlauchfolie nicht zu fest aber auch nicht zu lose auf den umlaufenden Riemen geführt wird.

Ein weiteres Problem besteht in diesem Zusammenhang darin, dass der Durchmesser des Wickeldorns nur bei einem frei liegenden Wickeldorn, d.h. vor dem Beginn der Produktion, grundsätzlich verstellbar ist; die gewählte Einstellung des Durchmessers jedoch während der sich anschließenden Produktion nicht mehr verändert werden kann. Fertigungsbedingte Toleranzen des Foliendurchmessers führen dadurch zu einer mehr oder weniger guten Anpassung des Wickeldorns an den tatsächlichen Foliendurchmesser. Ist der Wickeldorn größer als die Folie, wird die Folie übermäßig gedehnt. Ist der Wickeldorn kleiner als die Folie, sitzt die Folie nicht fest genug und kann sich verschieben.

Dies führt in der Praxis dazu, dass im Innenfolienschlauch Spannungen entstehen, die mitunter zu Falten führen, welche die Festigkeit des Auskleidungsschlauchs nach dem Aushärten in einem zu sanierenden Kanal nachteilig beeinträchtigen.

Demgemäß ist es eine Aufgabe der vorliegenden Erfindung, mechanische Spannungsunterschiede und damit einhergehende Falten des Innenfolienschlauchs, die durch fertigungsbedingte Durchmessertoleranzen der Folie des Innenfolienschlauchs während der Fertigung des Auskleidungsschlauchs hervorgerufen werden, zu vermeiden.

Diese Aufgabe wird erfindungsgemäß durch einen Wickeldorn mit den Merkmalen von Anspruch 1 gelöst.

Weitere Merkmale der Erfindung sind in den Unteransprüchen enthalten.

Gemäß der Erfindung werden ein, oder bei großen Wickeldornen für Auskleidungsschläuchen mit Normdurchmessern (DN) von mehr als 600 mm auch zwei, Riemen des Wickeldorns gefedert gelagert. Die Spannung auf den Innenfolienschlauch in radialer Richtung, d.h. in Richtung quer zur Vorschubrichtung bleibt dadurch auch dann stets im Wesentlichen konstant, wenn sich der Durchmesser des Innenfolienschlauchs fertigungsbedingt ändert. Anders ausgedrückt justiert sich der Durchmesser des Wickeldorns während der laufenden Produktion selbständig nach, so dass die Folie trotz ihrer fertigungsbedingten Durchmessertoleranzen vor und auch während des Aufwickelns der Faserbänder auf den Innenfolienschlauch immer im Wesentlichen die gleiche Spannung aufweist.

Wie die Anmelderin in diesem Zusammenhang gefunden hat, wird durch den Ausgleich der fertigungsbedingten Durchmesserveränderungen zwar der Durchmesser des gewickelten Liners im gleichen Maße wie der Durchmesser der Folie verändert, allerdings bereiten derartige Schwankungen im Normdurchmesser (DN) des Liners in der Praxis beim Aufstellen und Aushärten desselben keine Probleme.

Die Federung des oder der Riemen kann dabei auf unterschiedliche Art und Weise erfolgen, z.B. mit Hilfe von Andruckmitteln, die als Druckluftzylinder, vorzugsweise Balgzylinder, oder auch als mechanische Federn, z.B. Gasdruckfedern oder auch Spiraldruckfedern ausgeführt sind, welche eine vergleichsweise kleine Federkonstante aufweisen und zur Erzeugung der benötigten Andruckkräfte vorgespannt werden, um eine möglichst wegunabhängige, im Wesentlichen konstante Kraft zu erzeugen.

Die Erfindung wird nachfolgend mit Bezug auf die Zeichnungen anhand von bevorzugten Ausführungsformen beschrieben.

In den Zeichnungen zeigen:
- Fig. 1: eine schematische Seitendarstellung einer Wickelvorrichtung mit einem erfindungsgemäßen Wickeldorn während der Produktion eines Auskleidungsschlauchs,
- Fig. 2: eine schematische Detailansicht einer ersten Ausführungsform der Erfindung, bei der die Andruckmittel als pneumatische Federelemente ausgestaltet sind, die mit einer Druckluftquelle verbunden sind,
- Fig. 3: eine schematische seitliche Detailansicht einer zweiten Ausführungsform der Erfindung, bei der die Andruckmittel als Gasdruckfedern ausgestaltet sind,
- Fig. 4: eine schematische Darstellung einer weiteren Ausführungsform der Erfindung, bei der die Andruckmittel als Aktuator ausgestaltet sind, der die Riemen gemeinsam über eine zentrale Verstelleinrichtung in Abhängigkeit von den Signalen eines Drucksensors in radialer Richtung verfährt, um die umfängliche Spannung im Innenfolienschlauch während der Produktion im Wesentlichen konstant zu halten, und
- Fig. 5: eine schematischer Darstellung einer weiteren Ausführungsform der Erfindung, bei der die Kraft der Andruckmittel durch das Eigengewicht der zweiten Führungseinrichtung bereit gestellt wird, die beweglich und hängend am Grundkörper aufgenommen sind.

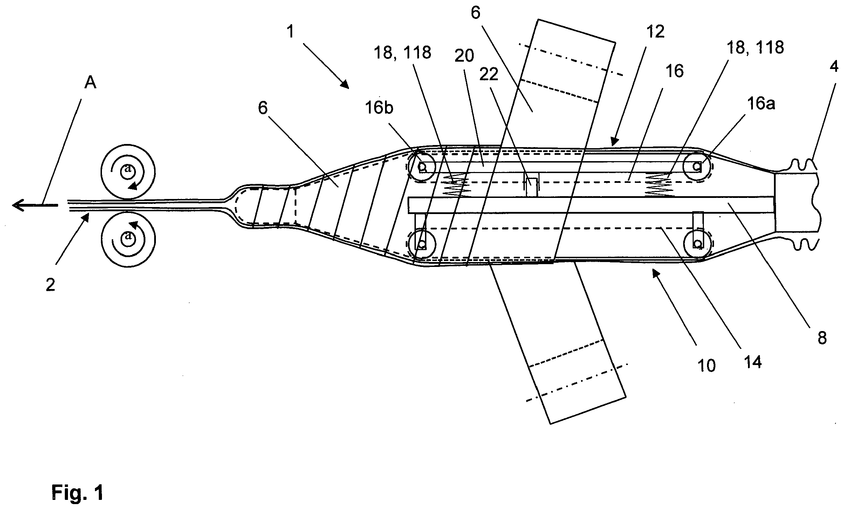

Wie in Fig. 1 gezeigt ist, umfasst ein Wickeldorn 1 in einer Wickelvorrichtung zur Herstellung eines Auskleidungsschlauchs 2 zur Auskleidung von Kanälen und Rohrleitungen einen vorzugsweise an einem nicht näher bezeichneten, fliegend gelagerten Halterohr befestigten Grundkörper 8, an dem wenigstens zwei Führungseinrichtungen 10, 12 aufgenommen sind, die jeweils einen endlos umlaufenden Riemen 14,16 aufweisen. Über die Riemen 14, 16, die vorzugsweise durch einen nicht näher gezeigten Motor angetrieben werden, wird in bekannter Weise ein Innenfolienschlauch 4 mit Hilfe von Zugwalzen 5 in einer Vorschubrichtung A bewegt, auf den wenigstens ein Faserband 6, das mit flüssigem Reaktionsharz getränkt ist, durch einen umlaufenden Wickelkörper überlappend gewickelt wird, der in den Figuren aus darstellungstechnischen Gründen nicht näher gezeigt ist.

Bei den in den Figuren 1 bis 3 gezeigten Ausführungsformen der Erfindung ist die erste Führungseinrichtung 10 gestellfest mit dem Grundkörper 8 gekoppelt, und der umlaufende Riemen 16 der zweiten Führungseinrichtung 12 ist in einer senkrecht zur Vorschubrichtung A verlaufenden Ebene bewegbar und wird durch Andruckmittel 18, 118 mit einer vorzugsweise im Wesentlichen konstanten Kraft von der Oberseite des Grundkörpers 8 weg gedrängt, um im Innenfolienschlauch eine nach Möglichkeit konstante Spannung zu erzeugen. Gestellfest ist hierbei so zu verstehen, dass die jeweiligen Elemente während der Produktion fest mit dem Grundkörper 8 verbunden ist und sich in radialer Richtung nicht bewegen kann.

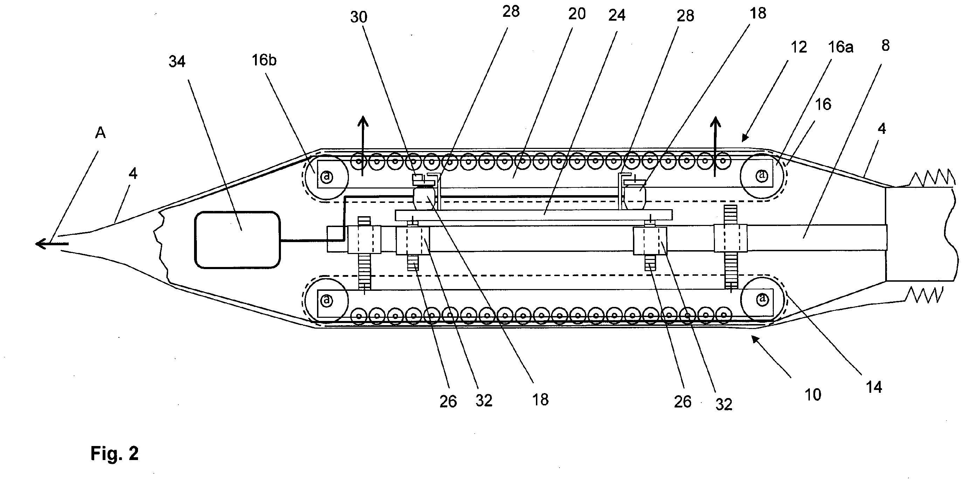

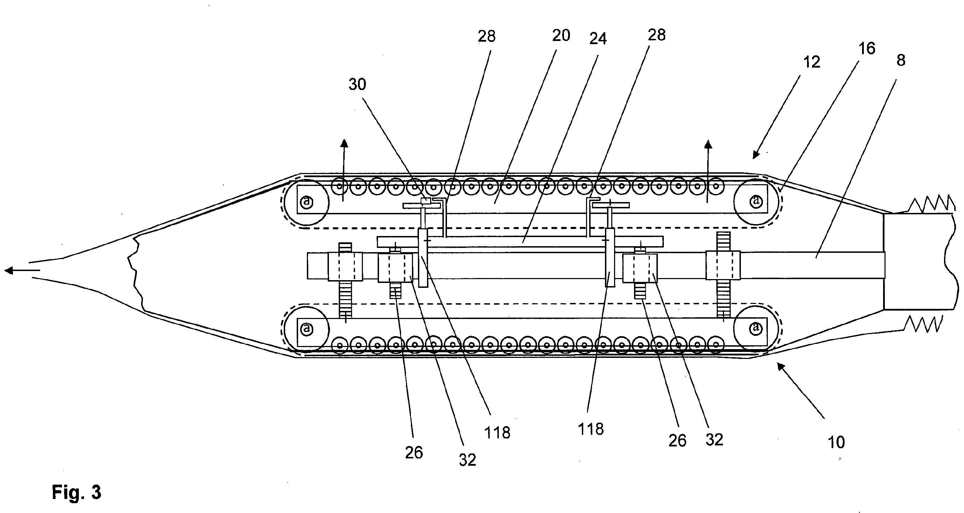

Hierzu wird bei den in Fig. 2 und 3 gezeigten Ausführungsform der Erfindung der endlos umlaufende Riemen 16 der zweiten Führungseinrichtung 12 über eine erste und eine zweite Umlenkrolle 16a, 16b geführt, die an einem gemeinsamen Trägerkörper 20 aufgenommen sind, auf welchen die Andruckmittel 18, 118 wirken. Um hierbei einen möglichst leichtgängigen Umlauf der Riemen 14, 16 zu erhalten, können diese auf nicht näher bezeichneten, am Trägerkörper 20 frei drehbar gelagerten Rollen laufen, die vorzugsweise als Kugellager ausgeführt sind.

Um hierbei eine Bewegung des gemeinsamen Trägerkörpers 20 gegenüber dem Grundkörper 8 in radialer Richtung, d.h. vom Zentrum des Grundkörpers 8 weg zu ermöglichen, ohne den Trägerkörper 20 mit den daran aufgenommenen Riemen in Längsrichtung des Trägerkörpers zu bewegen, ist vorzugsweise eine in Fig. 1 schematisch angedeutete Führung, insbesondere einer Linearführung 22 vorgesehen, welche z.B. ein gestellfestes stabförmiges Element umfassen kann, welches in einem am Trägerkörper 20 befestigten oder in diesem gebildeten hülsenförmigen Element, z.B. einer in den Trägerkörper 20 eingebrachten Durchgangsbohrung, geführt wird. Hierdurch eröffnet sich die Möglichkeit, den Riemen 16 der zweiten Führungseinrichtung 12 in gleicher Weise wie den Riemen 14 der ersten gestellfesten Führungseinrichtung 10 gewünschten Falls durch einen nicht näher gezeigten Antriebsmotor anzutreiben.

Wie weiterhin in den Darstellungen der Figuren 2 und 3 gezeigt ist, kann sich der Trägerkörper 20 gemäß einer weiteren Ausführungsform der Erfindung über die Andruckmittel 18; 118 an einem zweiten Basis-Trägerkörper 24 abstützen, der zur Anpassung des Durchmessers des Wickeldorns 1 an unterschiedliche Normdurchmesser des Innenfolienschlauchs 4 über eine Verstelleinrichtung 26, insbesondere über einen manuell oder motorisch betätigten zentralen Spindelantrieb, in einer senkrecht zur Vorschubrichtung (A) des Auskleidungsschlauchs 2 verlaufenden Richtung relativ zum Grundkörper 8 bewegbar ist. Hierdurch ergibt sich der Vorteil, dass sich der Durchmesser des erfindungsgemäßen Wickeldorns vor einem Produktionsauftrag in kürzester Zeit auf einen neuen Normdurchmesser einstellen lässt.

Bei den zuvor beschriebenen Ausführungsformen der Erfindung kann dem Trägerkörper 20 - wie in Figur 2 und 3 gezeigt - ein Anschlag 28 zugeordnet sein, der die Bewegung des Trägerkörpers 20 von der Außenseite des Grundkörpers 8 weg begrenzt. Hierdurch wird sichergestellt, dass sich der Riemen 16 radial ausschließlich in einem bevorzugten Bewegungsbereich bewegt, in dem die Andruckmittel eine im Wesentlichen konstante Andruckkraft erzeugen.

Nach einem weiteren der Erfindung zu Grunde liegenden Gedanken ist dem Anschlag 28 bei der zuvor beschriebenen Ausführungsform ein Endschalter und/oder ein Positionssensor 30 angeordnet, bei dessen Betätigung ein Warnsignal ausgegeben und/oder ein Stellsignal erzeugt wird, in Abhängigkeit von welchem ein Stellantrieb 32, beispielsweise ein elektrischer Stellmotor oder ein Pneumatikzylinder, aktiviert wird, welcher insbesondere auf den Basis-Trägerkörper 24 wirkt, um die erste und zweite Führungseinrichtung 10, 12, bzw. bei Wickeldornen mit großem Durchmesser auch weitere Führungseinrichtungen relativ zueinander gemeinsam auseinander oder zusammen zu fahren.

Bei der bevorzugten, in Figur 2 gezeigten Ausführungsform der Erfindung umfassen die Andruckmittel wenigstens ein pneumatisches Federelement 18, insbesondere einen Balgzylinder oder einen Druckluftzylinder, welches mit einer vorzugsweise im Inneren des Grundkörpers 8 angeordneten Druckluftquelle 34 verbunden ist. Hierbei sind über die Länge des Grundkörpers 8 vorzugsweise mehrere solcher pneumatischer Federelemente 18 angeordnet, von denen in Figur 2 der Einfachheit halber lediglich zwei Elemente gezeigt sind. Durch Erhöhen oder Erniedrigen des Luftdrucks in der Druckluftquelle 34, was im einfachsten Falle über ein nicht näher dargestelltes Ventil und einen Druckluftkompressor erfolgen kann, lässt sich die Andruckkraft, die durch die Balgzylinder, bzw. Druckluftzylinder 18 auf den umlaufenden Riemen 16 der zweiten Führungseinrichtung 12 ausgeübt wird, auf einen gewünschten Wert erhöhen oder erniedrigen.

Um hierbei auch im Nachhinein während der laufenden Produktion die Andruckkraft auf den Innenfolienschlauch 4 bei Bedarf zu erhöhen oder zu erniedrigen, beispielsweise um Temperaturschwankungen in der Produktionsstätte zu kompensieren, ist vorzugsweise in der Druckluftquelle 34 eine Heizeinrichtung, insbesondere eine elektrische Heizeinrichtung, beispielsweise eine ohmsche Widerstandsheizung, angeordnet, mit welcher sich die Temperatur der in der Druckluftquelle 34 gespeicherten Druckluft verändern lässt. Die Temperatur kann im Falle einer elektrischen Heizeinrichtung ferner durch eine nicht näher gezeigte Temperaturregelungseinrichtung auch auf einen konstanten Wert geregelt werden, sodass die Andruckkraft - und damit die Spannung des Innenfolienschlauchs 4 in Umfangsrichtung - während der laufenden Produktion stets eine vorgegebene, wohl definierte Größe besitzt.

Gemäß einer weiteren Ausführungsform der Erfindung, die sich besonders vorteilhaft zum Einsatz in rein mechanisch betätigten, nicht angetriebenen Wickeldornen 1 eignet, umfassen die Andruckmittel wenigstens eine mechanische Feder 118, die eine im Wesentlichen wegunabhängige Federkennline aufweist. Eine solche Andruckkraft lässt sich beispielsweise durch eine Gasdruckfeder, eine Tellerfeder oder eine stark vorgespannte Spiralfeder mit einer vergleichsweise geringen Federkonstante erhalten, wobei in diesem Falle davon auszugehen ist, dass die Andruckkraft nur im Wesentlichen konstant ist, da die zuvor genannten mechanischen Federn in der Praxis stets eine gewisse Wegabhängigkeit besitzen.

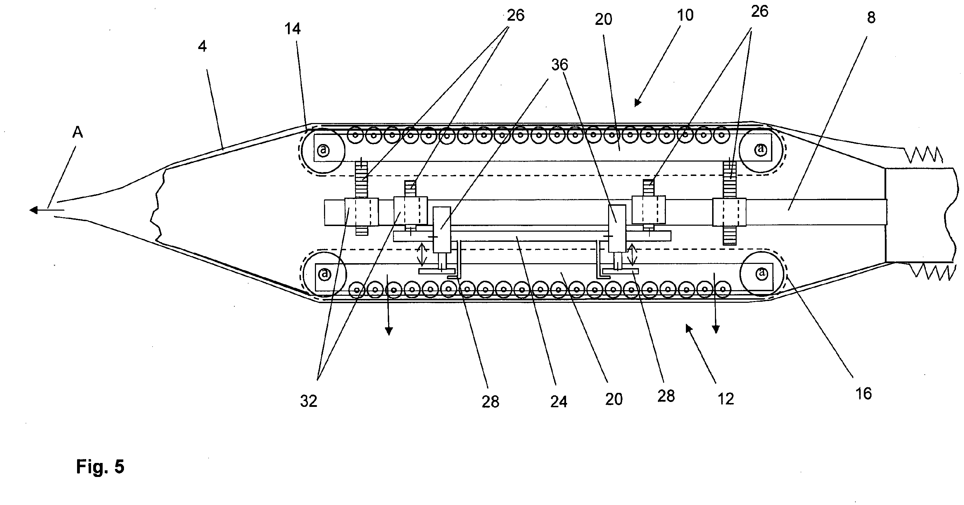

Nach einem weiteren der Erfindung zugrunde liegenden Gedanken kann die im Wesentlichen konstante Andruckkraft auf den zweiten Riemen 16 dadurch erzeugt werden, dass die zweite Führungseinrichtung 12 in einer Linearführung oder auch Schwenkführung - wie in Figur 5 angedeutet - hängend an der Unterseite des Grundkörpers 8 aufgenommen ist. Die im Wesentlichen konstante Andruckskraft der Andruckmittel wird hierbei durch das Eigengewicht der zweiten Führungseinrichtung 12 erzeugt, welches durch Entfernen oder Hinzufügen von Zusatzgewichten erhöht oder erniedrigt werden kann.

Bei der zuletzt beschriebenen Ausführungsform sowie auch bei den zuvor beschriebenen Ausführungsformen der Erfindung ist es weiterhin von Vorteil, wenn die Bewegung des Riemens 16 der zweiten Führungseinrichtung 12 durch ein Dämpfungselement 36 gedämpft wird, das zwischen dem Grundkörper 8 und der zweiten Führungseinrichtung 12 wirkt. Bei der in Figur 5 gezeigten Ausführungsform der Erfindung umfasst das Dämpfungselement einen Öldruckdämpfer oder einen Gasdruckdämpfer 36, bzw. im einfachsten Falle einen mit Öffnungen versehenen Luftbalg, der vorzugsweise mit seinem einen Ende am Basis-Trägerkörper 24 und mit seinem anderen Ende am Trägerkörper 20 befestigt ist.

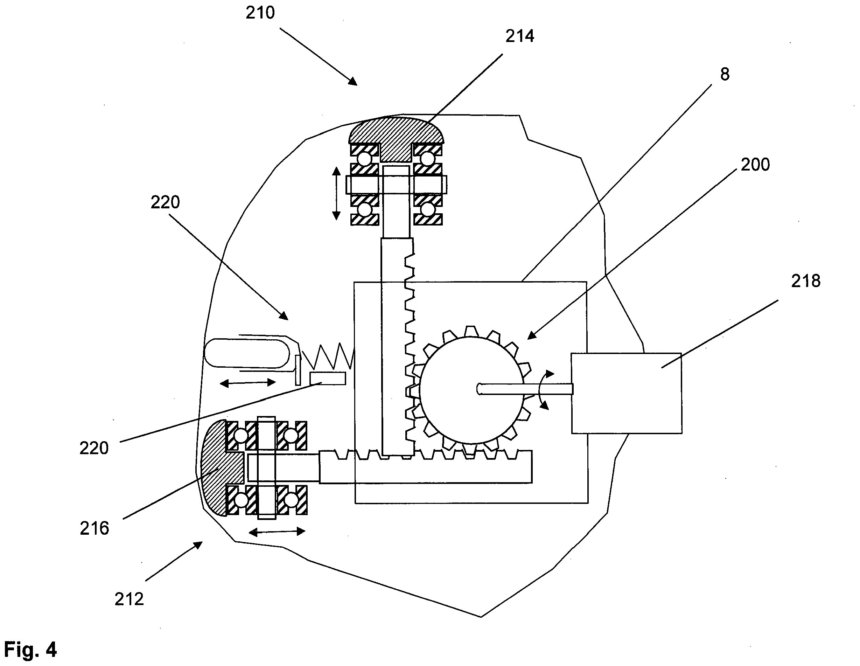

Schließlich kann nach einer weiteren alternativen Ausführungsform der Erfindung am Grundkörper 8 des Wickeldorns 1 eine erste und zweite Führungseinrichtung 210, 212 aufgenommen sein, die beide mechanisch miteinander über eine am Grundkörper 8 aufgenommene zentrale Verstelleinrichtung 200 gekoppelt sind, welche die Riemen 214, 216 der ersten und zweiten Führungseinrichtung 210, 212 gemeinsam um den gleichen Verfahrweg in radialer Richtung von der Oberfläche des Grundkörpers 8 weg oder auf diesen zu bewegt, wie dies in Fig. 4 gezeigt ist. Die Andruckmittel umfassen bei dieser Ausführungsform einen Aktuator 218, z.B. einen Elektromotor und ein entsprechendes Getriebe, oder einen Pneumatik- oder Hydraulikzylinder, welcher die zentrale Verstelleinrichtung 200, die durch ein zentrales Zahnrad und in dieses eingreifende Zahnstangen symbolisiert ist, in Abhängigkeit von den Signalen eines Drucksensors 220 in der Weise betätigt, dass die beiden Riemen 214, 216 der Führungseinrichtungen 210, 212 mit einer im Wesentlichen konstanten Andruckkraft an die Innenseite des Innenfolienschlauchs 4 angedrückt werden. Der Drucksensor 220 kann hierbei z.B. ein die Innenseite des Innenfolienschlauchs 4 kontaktierendes federbelastetes Laufrad oder ein federbelasteter Gleitfinger sein, der - wie gezeigt - am Grundkörper 8 oder auch am Trägerkörper 20 einer Führungseinrichtung 210, 212 befestigt sein kann, und dessen Auslenkung durch einen elektronischen Messwertgeber erfasst wird. In Abhängigkeit von den Signalen des Drucksensors 220 wird der Aktuator 218 während des Produktionsbetriebs in der Weise betätigt, dass die Verstelleinrichtung 200 die erste und zweite Führungseinrichtung 210, 212 radial nach innen fährt, wenn die Auslenkung des Drucksensors 220 zu klein ist, und umgekehrt. Die Versorgung der elektrisch betätigten Bauteile, wie z.B. der Aktuator und der Drucksensor sowie ggf. auch die im Inneren des Wickeldorns 1 aufgenommene Steuerungselektronik kann dabei in vorteilhafter Weise über einen Akkumulator oder auch eine Induktive Einkopplung der elektrischen Energie von außen her erfolgen.

### Liste der Bezugszeichen

- 1: Wickeldorn
- 2: Auskleidungsschlauch
- 4: Innenfolienschlauch
- 5: Zugwalzen
- 6: Faserband
- 8: Grundkörper
- 10: erste Führungseinrichtung
- 12: zweite Führungseinrichtung
- 14: Riemen der ersten Führungseinrichtung
- 16: Riemen der zweiten Führungseinrichtung
- 16a: erste Umlenkrolle
- 16b: zweite Umlenkrolle
- 18: Andruckmittel
- 20: Trägerkörper
- 22: Führung
- 24: Basis-Trägerkörper
- 26: Verstelleinrichtung zur Veränderung des Normdurchmessers
- 28: Anschlag
- 30: Positionssensor
- 32: Stellantrieb
- 34: Druckluftquelle
- 36: Dämpfungselement
- 118: mechanische Feder
- 200: Verstelleinrichtung zum gemeinsamen auseinanderfahren der Führungseinrichtungen
- 210: erste Führungseinrichtung der Ausführungsform von Fig. 4
- 212: zweite Führungseinrichtung der Ausführungsform von Fig. 4
- 214: erster Riemen
- 216: zweiter Riemen
- 218: Aktuator
- 220: Drucksensor
- A: Vorschubrichtung

## Patentansprüche

1. Wickeldorn (1) in einer Wickelvorrichtung zur Herstellung eines Auskleidungsscblauchs (2) zur Auskleidung von Kanälen und Rohrleitungen, welcher einen Innenfolienschlauch (4) und eine darauf angeordnete Lage aus wenigstens einem überlappend gewickelten Faserband (6) aufweist, das mit einem flüssigen Reaktionsharz getränkt ist, mit einem Grundkörper (8), an dem wenigstens zwei Führungseinrichtungen (10,12) aufgenommen sind, die jeweils einen endlos umlaufenden Riemen (14,16) umfassen über den der Innenfolienscblauch (4) in einer Vorschubrichtung (A) bewegt wird, **dadurch gekennzeichnet, dass**
die erste Führungseinrichtung (10) gestellfest mit dem Grundkörper (8) gekoppelt ist, und dass der umlaufende Riemen (16) der zweiten Führungseinrichtung (12) in einer senkrecht zur Vorschubrichtung (A) verlaufenden Ebene bewegbar ist und durch Andruckmittel (18; 118) mit einer vorzugsweise im Wesentlichen konstanten Kraft von der Oberseite des Grundkörpers (8) weg gedrängt wird.

2. Wickeldorn nach Anspruch 1,
**dadurch gekennzeichnet, dass**
der endlos umlaufende Riemen (16) der zweiten Führungseinrichtung (12) über eine erste und eine zweite Umlenkrolle (16a, 16b) geführt ist, die an einem gemeinsamen Trägerkörper (20) aufgenommen sind, auf welchen die Andruckmittel (18;118) wirken.

3. Wickeldorn nach Anspruch 2,
**dadurch gekennzeichnet, dass**
der gemeinsame Trägerkörper (20) gegenüber dem Grundkörper (8) in einer Führung (22), insbesondere einer Linearführung in radialer Richtung bewegbar geführt ist.

4. Wickeldorn nach Anspruch 2 oder 3,
**dadurch gekennzeichnet, dass**
sich der Trägerkörper (20) über die Andruckmittel (18; 118) an einem zweiten Basis-Trägerkörper (24) abstützt, der zur Anpassung des Durchmessers des Wickeldorns (1) an unterschiedliche Normdurchmesser des Innenfolienschlauchs (4) über eine Verstelleinrichtung (26), insbesondere über einen Spindelantrieb, in einer senkrecht zur Vorschubrichtung (A) des Auskleidungsschlauchs (2) verlaufenden Richtung relativ zum Grundkörper (8) bewegbar ist.

5. Wickeldorn nach einem der Ansprüche 2 bis 4,
**dadurch gekennzeichnet, dass**
dem Trägerkörper (20) ein Anschlag (28) zugeordnet ist, welcher die Bewegung des Trägerkörpers (20) von der Außenseite des Grundkörpers (8) weg begrenzt.

6. Wickeldorn nach einem der Ansprüche 1 bis 5,
**dadurch gekennzeichnet, dass**
dem Anschlag (28) ein Endschalter und/oder ein Positionssensor (30) zugeordnet ist, bei dessen Betätigung ein Warnsignal ausgegeben und/oder ein Stellsignal erzeugt wird, in Abhängigkeit von welchem ein Stellantrieb (32) zum radialen Auseinanderfahren oder Zusammenfahren der ersten und zweiten Führungseinrichtung (10, 12) oder weiterer Führungseinrichtungen aktiviert wird.

7. Wickeldorn nach einem der vorhergehenden Ansprüche,
**dadurch gekennzeichnet, dass**
das die Andruckmittel wenigstens ein pneumatisches Federelement (18), insbesondere einen Balgzylinder oder einen Druckluftzylinder, umfassen, welches mit einer vorzugsweise im Inneren des Grundkörpers (8) angeordneten Druckluftquelle (34) verbindbar ist.

8. Wickeldorn nach Anspruch 7,
**dadurch gekennzeichnet, dass**
der Druckluftquelle (34) eine Heizeinrichtung, insbesondere eine elektrische Heizeinrichtung, zugeordnet ist, mittels welcher die Temperatur der in der Druckluftquelle (34) gespeicherten Druckluft veränderbar ist.

9. Wickeldorn nach einem der Ansprüche 1 bis 6,
**dadurch gekennzeichnet, dass**
die Andruckmittel wenigstens eine mechanische Feder (118) mit einer im Wesentlichen wegunabhängigen Federkennline, insbesondere eine Gasdruckfeder, eine Tellerfeder oder eine vorgespannte Spiralfeder, umfassen.

10. Wickeldorn nach einem der Ansprüche 1 bis 5,
**dadurch gekennzeichnet, dass**
die zweite Fübrungseinrichtung (12) hängend an der Unterseite des Grundkörpers (8) aufgenommen ist und die im Wesentlichen konstante Kraft der Andruckmittel durch das Eigengewicht der zweiten Führungseinrichtung (12) bereit gestellt wird.

11. Wickeldorn nach einem der vorhergehenden Ansprüche,
**dadurch gekennzeichnet, dass**
ein Dämpfungselement (36) zum Dämpfen der Bewegung der zweiten Führungseinrichtung (12) vorgesehen ist, das zwischen dem Grundkörper (8) und der zweiten Fübrungseinrichtung (12) wirkt.

## Claims

1. A winding mandrel (1) in a winding apparatus for producing a liner hose (2) for the lining of channels and pipelines, which has an inner film hose (4) and a layer arranged thereon made of at least one fibrous strip (6) wound in an overlapping manner which is impregnated with a liquid reaction resin, with a base body (8) on which at least two guide devices (10, 12) are accommodated, each comprising a continually revolving belt (14, 16) by means of which the inner film hose (4) is moved in a feed direction (A),
**characterised in that**
the first guide device (10) is coupled by fixed mounting to the base body (8), and **in that** the revolving belt (16) of the second guide device (12) can be moved in a plane extending perpendicularly to the feed direction (A) and is forced away from the upper side of the base body (8) with a preferably substantially constant force by means of pressing means (18; 118).

2. A winding mandrel according to Claim 1,
**characterised in that**
the continually revolving belt (16) of the second guide device (12) is guided over a first and a second deflecting roll (16a, 16b) which are accommodated on a common support body (20) on which the pressing means (18; 118) act.

3. A winding mandrel according to Claim 2,
**characterised in that**
the common support body (20) is guided movably in the radial direction relative to the base body (8) in a guide (22), in particular a linear guide.

4. A winding mandrel according to Claim 2 or 3,
**characterised in that**
the support body (20) is braced via the pressing means (18; 118) against a second base support body (24) which, for the adaptation of the diameter of the winding mandrel (1) to different standard diameters of the inner film hose (4), can be moved relative to the base body (8) via an adjustment device (26), in particular via a spindle drive, in a direction extending perpendicularly to the feed direction (A) of the liner hose (2).

5. A winding mandrel according to one of Claims 2 to 4,
**characterised in that**
an abutment (28) which limits the movement of the support body (20) away from the outer side of the base body (8) is associated with the support body (20).

6. A winding mandrel according to one of Claims 1 to 5,
**characterised in that**
a limit switch and/or a position sensor (30) is associated with the abutment (28), upon the actuation of which switch and/or sensor a warning signal is issued and/or a control signal is generated, depending on which an actuating drive (32) is activated for moving the first and second guide devices (10, 12) or additional guide devices radially apart or towards one another.

7. A winding mandrel according to one of the preceding claims,
**characterised in that**
the pressing means comprise at least one pneumatic spring element (18), in particular a bellows cylinder or a compressed air cylinder, which can be connected to a compressed air source (34) arranged preferably in the interior of the base body (8).

8. A winding mandrel according to Claim 7,
**characterised in that**
a heating device, in particular an electrical heating device, by means of which the temperature of the compressed air stored in the compressed air source (34) can be changed, is associated with the compressed air source (34).

9. A winding mandrel according to one of Claims 1 to 6,
**characterised in that**
the pressing means comprise at least one mechanical spring (118) with a substantially path-independent spring characteristic curve, in particular a gas pressure spring, a cup spring or a prestressed spiral spring.

10. A winding mandrel according to one of Claims 1 to 5,
**characterised in that**
the second guide device (12) is accommodated suspended from the bottom side of the base body (8) and the substantially constant force of the pressing means is provided by the weight of the second guide device (12) itself.

11. A winding mandrel according to one of the preceding claims,
**characterised in that**
a damping element (36) for the damping of the movement of the second guide device (12) is provided which acts between the base body (8) and the second guide device (12).

## Revendications

1. Mandrin de bobinage (1) dans un dispositif d'enroulement pour la fabrication d'un revêtement tubulaire (2) pour le revêtement de conduits et de canalisations, qui présente un film tubulaire interne (4) et une couche appliquée par-dessus constituée d'au moins un ruban de fibres (6) enroulé en chevauchement, qui est imprégnée d'une résine réactive liquide, comprenant un corps de base (8) contre lequel viennent se loger au moins deux mécanismes de guidage (10, 12) qui comprennent respectivement une courroie périphérique sans fin (14, 16) par-dessus laquelle se déplace le film tubulaire interne (4) dans une direction d'avance (A), **caractérisé en ce que** le premier mécanisme de guidage (10) est couplé à demeure avec le corps de base (8), et **en ce que** la courroie périphérique (16) du deuxième mécanisme de guidage (12) peut être déplacée dans un plan s'étendant perpendiculairement à la direction d'avance (A) et est poussée via des moyens de pression (18 ; 118) avec une force de préférence essentiellement constante à l'écart du côté supérieur du corps de base (8).

2. Mandrin de bobinage selon la revendication 1, **caractérisé en ce que** la courroie périphérique sans fin (16) du deuxième mécanisme de guidage (12) est guidée via un premier et un deuxième rouleau de renvoi (16a, 16b), qui viennent se loger contre un corps de support commun (20), sur lesquels agissent les moyens de pression (18 ; 118).

3. Mandrin de bobinage selon la revendication 2, **caractérisé en ce que** le corps de support commun (20) est guidé en mobilité en direction radiale par rapport au corps de base (8), dans un guidage (22), en particulier un guidage linéaire.

4. Mandrin de bobinage selon la revendication 2 ou 3, **caractérisé en ce que** le corps de support (20) vient s'appuyer, via les moyens de pression (18 ; 118) contre un deuxième corps de support de base (24), qui peut être déplacé par rapport au corps de base (8), à des fins d'adaptation du diamètre du mandrin de bobinage (1) à différents diamètres standard du film tubulaire interne (4) via un mécanisme de déplacement (26), en particulier via un vérin à vis, dans une direction s'étendant perpendiculairement à la direction d'avance (A) du revêtement tubulaire (2).

5. Mandrin de bobinage selon l'une quelconque des revendications 2 à 4, **caractérisé en ce qu'**une butée (28) est attribuée au corps de support (20), qui délimite le mouvement du corps de support (20) à l'écart du côté externe du corps de base (8.)

6. Mandrin de bobinage selon l'une quelconque des revendications 1 à 5, **caractérisé en ce qu'**un interrupteur de fin de course et/ou un capteur de position (30) est/sont attribué(s) à la butée (28), un signal d'avertissement étant émis et/ou un signal de réglage étant généré lors de son activation et/ou de leur activation, en fonction duquel et/ou desquels, une commande de réglage (32) est activée pour l'écartement ou le rapprochement en direction radiale du premier et du deuxième mécanisme de guidage (10, 12) ou d'autres mécanismes de guidage.

7. Mandrin de bobinage selon l'une quelconque des revendications précédentes, **caractérisé en ce que** les moyens de pression comprennent au moins un élément ressort (18) de type pneumatique, en particulier un vérin à soufflet ou un vérin à air comprimé, qui peut être relié à une source d'air comprimé (34) disposée de préférence à l'intérieur du corps de base (8).

8. Mandrin de bobinage selon la revendication 7, **caractérisé en ce qu'**un mécanisme de chauffage, en particulier un mécanisme de chauffage électrique, est attribué à la source d'air comprimé (34), au moyen duquel la température de l'air comprimé accumulé dans la source d'air comprimé (34) peut être modifiée.

9. Mandrin de bobinage selon l'une quelconque des revendications 1 à 6, **caractérisé en ce que** les moyens de pression comprennent au moins un ressort mécanique (118) comprenant une ligne caractéristique essentiellement indépendante de la position, en particulier un ressort à pression de gaz, un ressort Belleville ou un ressort hélicoïdal précontraint.

10. Mandrin de bobinage selon l'une quelconque des revendications 1 à 5, **caractérisé en ce que** le deuxième mécanisme de guidage (12) vient se loger en suspension contre le côté inférieur du corps de base (8) et la force essentiellement constante des moyens de pression est mise à disposition via le propre poids du deuxième mécanisme de guidage (12).

11. Mandrin de bobinage selon l'une quelconque des revendications précédentes, **caractérisé en ce qu'**un élément d'amortissement (36) est prévu pour l'amortissement du mouvement du deuxième mécanisme de guidage (12), qui agit entre le corps de base (8) et le deuxième mécanisme de guidage (12).
